# EUROPEAN PATENT APPLICATION

(11) **EP 4 397 717 A1**
(43) Date of publication of application: **10.07.2024**
(21) Application number: 22864364.9
(22) Date of filing: 24.08.2022
(51) Int. Cl.: C08L 77/06, C08K 5/3477, C08K 7/14

(54) **POLYAMIDE RESIN COMPOSITION**

(30) Priority: 01.09.2021 JP 2021142065
(71) Applicant: UBE Corporation, Ube-shi, Yamaguchi 755-8633 (JP)
(72) Inventor: YASUI, Tetsuya, Ube-shi, Yamaguchi 755-8633 (JP); TONARI, Masaya, Ube-shi, Yamaguchi 755-8633 (JP); ARAKAWA, Seiichi, Ube-shi, Yamaguchi 755-8633 (JP)
(74) Representative: Hoffmann Eitle
(86) International application number: PCT/JP2022/031845
(87) International publication number: WO 2023/032780

(57) **Abstract**

This is to provide a polyamide resin composition that has good mechanical characteristics such as tensile characteristics, bending characteristics and impact resistance, and low water absorption.

The polyamide resin composition of the present invention comprises 55 to 78% by mass of an aliphatic polyamide resin (A), 20 to 35% by mass of glass fiber (B), 1 to 9% by mass of a crosslinking agent (C), 0.1 to 1.5% by mass of a heat-resistant agent (D) and 0 to 6% by mass of an inorganic filler other than glass fiber (E) in 100% by mass of the polyamide resin composition, and the aliphatic polyamide resin (A) has an average number of carbon atoms per one amide group of exceeding 6.

## Description

### TECHNICAL FIELD

The present invention relates to a polyamide resin composition.

### BACKGROUND ART

Polyamide resins have excellent mechanical characteristics, heat resistance and chemical resistance, so that they are widely used as engineering plastics for automotive parts, mechanical parts, sliding parts, electrical and electronic parts, etc.

At the time of using them for these uses, there is known a polyamide resin composition in which a crosslinking agent is added to a polyamide resin for improving slidability and strength (for example, see Patent Document 1 and Patent Document 2).

In Patent Documents 1 and 2, polyamide 46, polyamide 66, polyamide 6, polyamide 9T, polyamide 6/11, etc., are used as a polyamide resin.

In addition, in Patent Document 1 and Patent Document 2, the above-mentioned slidability and strength are improved by irradiating active energy rays to a polyamide resin composition to crosslink the crosslinking agent.

On the other hand, in Patent Document 3, there is disclosed a polyamide resin composition improved in creep characteristics without directly irradiating active energy rays while containing a crosslinking agent.

### PRIOR ART DOCUMENTS

### PATENT DOCUMENTS

Patent Document 1: JP 2015-209512A
Patent Document 2: JP Patent No. 6,283,453
Patent Document 3: JP 2003-327634A

### SUMMARY OF THE INVENTION

### PROBLEMS TO BE SOLVED BY THE INVENTION

In Patent Documents 1 and 2, the melting point of the resin used as the polyamide resin is high, so that there is a problem in moldability when producing a molded material.
In Patent Document 3, there is still room for improvement in mechanical characteristics. Thus, an object of the present invention is to provide a polyamide resin composition which has good mechanical characteristics such as tensile characteristics, bending characteristics and impact resistance, low water absorption and not so high density.

### MEANS TO SOLVE THE PROBLEMS

The present invention is, for example, the following [1] to [8].
[1] A polyamide resin composition, which comprises 55 to 78% by mass of an aliphatic polyamide resin (A), 20 to 35% by mass of glass fiber (B), 1 to 9% by mass of a crosslinking agent (C), 0.1 to 1.5% by mass of a heat-resistant agent (D) and 0 to 6% by mass of an inorganic filler other than glass fiber (E) in 100% by mass of the polyamide resin composition, and
   the aliphatic polyamide resin (A) has an average number of carbon atoms per one amide group of exceeding 6.
[2] The polyamide resin composition of [1], wherein the aliphatic polyamide resin (A) has a melting point measured in accordance with ISO 11357-3 of 170 to 210°C.
[3] The polyamide resin composition of [1] or [2], wherein the aliphatic polyamide resin (A) is at least one kind selected from the group consisting of at least one kind of a homopolymer selected from the group consisting of polynonamethylene dodecamide (polyamide 912), polydecamethylene sebacamide (polyamide 1010), polydecamethylene dodecamide (polyamide 1012), polydodecamethylene dodecamide (polyamide 1212), polyundecaneamide (polyamide 11) and polydodecaneamide (polyamide 12), and at least one kind of a copolymer selected from the group consisting of polyamide 6/12 copolymer and polyamide 6/66/12 copolymer.
[4] The polyamide resin composition of any of [1] to [3], wherein the crosslinking agent (C) is at least one kind selected from the group consisting of triallyl cyanurate, triallyl isocyanurate, trimethallyl isocyanurate, diallyl phthalate and diallylbenzene phosphonate.
[5] The polyamide resin composition of any of [1] to [4], wherein the heat-resistant agent (D) is an inorganic-based heat resistant agent.
[6] The polyamide resin composition of any of [1] to [5], wherein the glass fiber (B) is surface treated by a surface treatment agent and/or a binder.
[7] A molded product of the polyamide resin composition of any of [1] to [6].
[8] A polyamide resin composition crosslinked material obtainable by irradiating active energy rays to a molded product of the polyamide resin composition of [7].
[9] The polyamide resin composition crosslinked material of [8], wherein a density thereof is 1.20 to 1.28 g/ml.

### EFFECTS OF THE INVENTION

The polyamide resin composition of the present invention has good mechanical characteristics such as tensile characteristics, bending characteristics and impact resistance, low water absorption and not so high density.

### EMBODIMENTS TO CARRY OUT THE INVENTION

The polyamide resin composition of the present invention comprises 55 to 78% by mass of an aliphatic polyamide resin (A), 20 to 35% by mass of glass fiber (B), 1 to 9% by mass of a crosslinking agent (C), 0.1 to 1.5% by mass of a heat-resistant agent (D) and 0 to 6% by mass of an inorganic filler other than glass fiber (E) in 100% by mass of the polyamide resin composition, and the aliphatic polyamide resin (A) has an average number of carbon atoms per one amide group of exceeding 6.

Incidentally, the above-mentioned content is the value obtained by rounding off one digit below the stated value.

### <Aliphatic polyamide resin (A)>

The polyamide resin composition comprises an aliphatic polyamide resin (A). The aliphatic polyamide resin (A) has an average number of carbon atoms per one amide group of exceeding 6.

As the aliphatic polyamide resin, there may be mentioned aliphatic homopolyamide resins and aliphatic copolymerized polyamide resins. The aliphatic homopolyamide resin is a polyamide resin consisting of one kind of structural unit derived from an aliphatic monomer. The aliphatic homopolyamide resin may consist of at least one of one kind of lactam and an aminocarboxylic acid which is a hydrolysate of the lactam, or may consist of a combination of one kind of diamine and one kind of dicarboxylic acid. The aliphatic copolymerized polyamide resin is a polyamide resin consisting of two or more kinds of structural units derived from the aliphatic monomers. The aliphatic copolymerized polyamide resin is a copolymer consisting of two or more kinds selected from the group consisting of a combination of diamine and dicarboxylic acid, lactam and aminocarboxylic acid. Here, the combination of diamine and dicarboxylic acid is deemed to be one kind of monomer in combination of one kind of diamine and one kind of dicarboxylic acid.

As the aliphatic polyamide resin (A), specifically, there may be preferably mentioned an aliphatic homopolyamide having an average number of carbon atoms per one amide group of exceeding 6; an aliphatic polyamide copolymer using only a raw material monomer (structural repeating unit) forming an aliphatic polyamide having an average number of carbon atoms per one amide group of exceeding 6; and an aliphatic polyamide copolymer using a raw material monomer (structural repeating unit) forming an aliphatic polyamide having an average number of carbon atoms per one amide group of exceeding 6 as at least one component, and a raw material monomer (structural repeating unit) forming an aliphatic polyamide having an average number of carbon atoms per one amide group of 6 or less as at least one component whereby the average number of carbon atoms per one amide group of exceeding 6 as a whole polyamide resin.

The aliphatic homopolyamide resin having an average number of carbon atoms per one amide group of exceeding 6 refers to, when the structural units of the polyamide are derived from lactam and an aminocarboxylic acid, that all the number of carbon atoms contained in the structural unit exceeds 6. When the structural units are derived from a combination of a diamine and a dicarboxylic acid, it means the value that the sum of the total number of carbon atoms contained in the diamine and the total number of carbon atoms contained in the dicarboxylic acid divided by 2 exceeds 6. That is, in the average number of carbon atoms, the number of carbon atoms in the amide group is also included.

The aliphatic copolymerized polyamide resin having an average number of carbon atoms per one amide group of exceeding 6 means that the number of carbon atoms per one amide group of each structural unit constituting the copolymer is obtained as mentioned above, and the average number of carbon atoms in the copolymer of the value obtained by multiplying the molar concentration of each structural unit in the copolymer and the number of carbon atoms of each structural unit per one amide group exceeds 6.

From the viewpoints of moldability and mechanical characteristics, the aliphatic polyamide resin (A) has the average number of carbon atoms per one amide group of exceeding 6, preferably 7 to 12, and more preferably 10 to 12.

From the viewpoints of moldability and mechanical characteristics, a melting point of the aliphatic polyamide resin (A) is preferably 170 to 210°C, and more preferably 175 to 200°C.

The melting point is obtained in accordance with ISO 11357-3 using a differential scanning calorimeter, and a temperature of the peak value of a melting curve measured by heating a sample to a temperature of the expected melting point or higher and then cooling the sample at a rate of 10°C per minute to 30°C, and after allowing to stand as such for about 1 minute, heating the same at a rate of 20°C per minute is made a melting point.

A terminal amino group concentration of the aliphatic polyamide resin (A) is, as a terminal amino group concentration obtained by dissolving in a mixed solvent of phenol and methanol and by neutralization titration, preferably in the range of 20 µmol/g or more, more preferably in the range of 20 µmol/g or more and 60 µmol/g or less, and particularly preferably in the range of 25 µmol/g or more and 35 µmol/g or less. If it is in the above-mentioned range, moldability or mechanical characteristics can be sufficiently obtained.

As the aliphatic homopolyamide resin having the average number of carbon atoms per one amide group of exceeding 6, there may be mentioned polyenantholactam (polyamide 7), polyundecanelactam (polyamide 11), polylauryllactam (polyamide 12), polytetramethylene dodecamide (polyamide 412), polypentamethylene adipamide (polyamide 56), polypentamethylene azelamide (polyamide 59), polypentamethylene sebacamide (polyamide 510), polypentamethylene dodecamide (polyamide 512), polyhexamethylene suberamide (polyamide 68), polyhexamethylene azelamide (polyamide 69), polyhexamethylenesebacamide (polyamide 610), polyhexamethylene undecamide (polyamide 611), polyhexamethylenedodecamide (polyamide 612), polyhexamethylene tetradecamide (polyamide 614), polyhexamethylene hexadecamide (polyamide 616), polyhexamethylene octadecamide (polyamide 618), polynonamethylene adipamide (polyamide 96), polynonamethylene suberamide (polyamide 98), polynonamethylene azelamide (polyamide 99), polynonamethylene sebacamide (polyamide 910), polynonamethylene dodecamide (polyamide 912), polydecamethylene adipamide (polyamide 106), polydecamethylene suberamide (polyamide 108), polydecamethylene azelamide (polyamide 109), polydecamethylene sebacamide (polyamide 1010), polydecamethylene dodecamide (polyamide 1012), polydodecamethylene adipamide (polyamide 126), polydodecamethylene suberamide (polyamide 128), polydodecamethylene azelamide (polyamide 129), polydodecamethylene sebacamide (polyamide 1210), polydodecamethylene dodecamide (polyamide 1212), polyamide 122, etc.

As the aliphatic copolymerized polyamide resin having the average number of carbon atoms per one amide group of exceeding 6, in addition to the copolymer in which raw material monomers which form an aliphatic homopolyamide resin having the average number of carbon atoms per one amide group exceeding 6 are used with several kinds, there may be mentioned caprolactam/hexamethylenediaminoazelaic acid copolymer (polyamide 6/69), caprolactam/hexamethylenediaminosebacic acid copolymer (polyamide 6/610), caprolactam/hexamethylene diaminoundecane dicarboxylic acid copolymer (polyamide 6/611), caprolactam/hexamethylenediamino-dodecane dicarboxylic acid copolymer (polyamide 6/612), caprolactam/aminoundecanoic acid copolymer (polyamide 6/11), caprolactam/lauryllactam copolymer (polyamide 6/12), caprolactam/hexamethylenediaminoadipic acid/lauryllactam copolymer (polyamide 6/66/12), caprolactam/hexamethylenediaminoadipic acid/hexamethylenediaminosebacic acid copolymer (polyamide 6/66/610), caprolactam/hexamethylenediaminoadipic acid/hexamethylenediamino-dodecanedicarboxylic acid copolymer (polyamide 6/66/612), etc.

Among these, from the viewpoint of suppressing water absorption, the aliphatic polyamide resin (A) is preferably at least one kind selected from at least one kind of a homopolymer selected from the group consisting of polynonamethylene dodecamide (polyamide 912), polydecamethylene sebacamide (polyamide 1010), polydecamethylene dodecamide (polyamide 1012), polydodecamethylene dodecamide (polyamide 1212), polyundecaneamide (polyamide 11) and polydodecaneamide (polyamide 12) and at least one kind of a copolymer selected from the group consisting of polyamide 6/12 copolymer and polyamide 6/66/12 copolymer, and more preferably polydodecaneamide (polyamide 12).

The aliphatic polyamide resin (A) is contained in 100% by mass of the polyamide resin composition, 55 to 78% by mass, and preferably 58 to 70% by mass. If the content of the aliphatic polyamide resin (A) is less than the above-mentioned range, molding is difficult, and if it exceeds the above-mentioned range, mechanical characteristics are not sufficiently exhibited.

### <Glass fiber (B)>

The polyamide resin composition comprises glass fiber (B).

The fiber refers to a shape having a fiber length of 0.3 mm or more and an aspect ratio (a ratio of fiber length/diameter) of 10 or more. The glass fiber (B) in the polyamide resin composition includes those in which the glass fiber (B) is broken by melt-kneading as described later. Therefore, in the content of the glass fiber (B) in the polyamide resin composition, those that do not meet the definition of the "fiber" in the present specification are contained. The content of the glass fiber (B) in the polyamide resin composition matches the amount of the glass fiber as the raw material.

The glass fiber (B) may be surface-treated with a surface treatment agent and/or a binder. Further, in order to improve workability, they may be converged or granulated by these surface treatment agents. As the surface treatment agent and the binder, there may be mentioned various kinds of coupling agents such as silane coupling agents, titanium-based coupling agents, aluminum-based coupling agents and zirconia-based coupling agents; water glass, methyl cellulose, carboxymethyl cellulose, hydroxyethyl cellulose, hydroxypropyl cellulose, starch, polyvinyl alcohol, acrylic resins, epoxy resins, phenol resins, polyvinyl acetate, polyurethane resins, epoxy-based compounds, isocyanate-based compounds, colloidal silica, colloidal alumina, fatty acids, surfactants, etc. The surface treatment agent and the binder may be used alone or two or more kinds in combination.

The surface treatment agent and the binder are applied to the glass fiber (B) in advance and dried for surface treatment or convergence treatment, or may be added simultaneously with the glass fiber (B) at the time of preparation of the resin composition.

As the glass fiber as raw materials, those having an average fiber diameter of 3 to 23 µm can be used. From the points of dimensional stability and mechanical characteristics of the molded product comprising the composition, an average fiber diameter of is preferably 6 to 23 µm and, for example, those having an average fiber diameter of 10 to 23 µm can be used.

The glass fiber may be used alone or two or more kinds in combination. Two or more kinds of glass fibers having different average fiber diameters may be used. As the combination of the glass fiber diameters, for example, there may be mentioned a combination of (B 1) glass fiber having an average fiber diameter of 6 to 11 µm and (B2) glass fiber having an average fiber diameter of 13 to 25 µm.

A glass fiber length (cut length) of the raw materials is not particularly limited, and cut chopped strands of 1 mm to 50 mm can be used, and 3 mm to 10 mm is more preferable from the viewpoint of productivity.

An average fiber length of the glass fiber in the polyamide resin composition is not particularly limited, and is preferably 50 µm to 1,000 µm, and from the viewpoint of mechanical characteristics and the points of sufficiently fibrillating the glass fiber to uniformly disperse the same in the material, it is more preferably 100 µm to 500 µm, and further preferably exceeding 200 µm and 400 µm or less.

The values of the average fiber diameter of the above-mentioned glass fiber or glass fiber length (cut length) of the raw materials are values before melt-kneading with the polyamide. The value of the average fiber length of the glass fiber in the polyamide resin composition is a value after melt-kneading with the polyamide. The value after melt-kneading takes into consideration the case where at least part of the glass fibers are broken and dispersed in the composition during the melt-kneading of raw materials in the production process of the polyamide composition.

The average fiber diameter of the glass fiber as the raw materials and the glass fiber length (cut length) of the raw materials can be observed using an optical microscope. The average fiber diameter of the glass fiber (B) as the raw materials and the glass fiber length (cut length) of the raw materials may be values mentioned on a catalog.

The average fiber length of the glass fiber in the polyamide resin composition can be observed with an optical microscope after dissolving the polyamide resin in the polyamide resin composition using a solvent and separating it from the glass fibers. From the observed image, glass fiber lengths of about 1,000 arbitrarily selected fibers are measured using image analysis software, and the average value is determined to be the average fiber length.

As the commercially available product of the glass fiber, there may be mentioned product names of ECS 03T-249, ECS 03T-249H, ECS 03T-275, ECS 03T-275H, ECS 03T-289, ECS 03T-289H, ECS 03T-289DE, ECS 03T-920EW and HP3610XM manufactured by Nippon Electric Glass Co., Ltd., and product names of 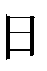 CS 3DE-456S, CSG3J-820, CSG3PA-820S, CS 3SH-223 and CS 3PE-454 manufactured by Nitto Boseki Co., Ltd., etc.

The glass fiber (B) is contained in an amount of 20 to 35% by mass, and preferably 25 to 33% by mass in 100% by mass of the polyamide resin composition. If the amount of the glass fiber (B) is less than the above-mentioned range, mechanical characteristics are poor. If the amount of the glass fiber (B) is more than the above-mentioned range, moldability may become difficult in some cases.

### <Crosslinking agent (C)>

The polyamide resin composition comprises a crosslinking agent (C).

As the crosslinking agent (C), there may be mentioned polyfunctional acrylic-based monomers, polyfunctional allyl-based monomers, and mixed monomers of these, etc. When the specific examples are further mentioned, for example, as the polyfunctional acrylic-based monomer, ethylene oxide-modified bisphenol A di(meth)acrylate, 1,4-butanediol di(meth)acrylate, diethylene glycol di(meth)acrylate, dipentaerythritol hexaacrylate, dipentaerythritol monohydroxy pentaacrylate, caprolactone-modified dipentaerythritol hexaacrylate, pentaerythritol tri(meth)acrylate, pentaerythritol tetra(meth)acrylate, polyethylene glycol di(meth)acrylate, trimethylolpropane triacrylate, EO-modified trimethylolpropane tri(meth)acrylate, PO-modified trimethylolpropane tri(meth)acrylate, tris(acryloxyethyl)isocyanurate, tris(methacryloxyethyl)isocyanurate and mixtures thereof are common. In particular, tris(acryloxyethyl)isocyanurate (triacrylic acid ester of tris(2-hydroxyethyl) isocyanuric acid) has low skin irritation and can be preferably used.

Also, as the polyfunctional allyl-based monomer, for example, there are triallyl cyanurate, triallyl isocyanurate, trimethallyl isocyanurate, diallyl phthalate and diallylbenzene phosphonate and mixtures thereof, etc.

Among these, from the viewpoint of ease of cross-linking by electron beam irradiation, at least one kind selected from the group consisting of triallyl cyanurate, triallyl isocyanurate, trimethallyl isocyanurate, diallyl phthalate and diallylbenzene phosphonate is preferable.

To the crosslinking agent may be added, if necessary, an initiator, a catalyst, a stabilizer, etc. These initiators, catalysts, stabilizers, etc., may be added to the crosslinking agent, or may be added to the polyamide resin.

The crosslinking agent (C) is contained in an amount of 1 to 9% by mass, preferably 2 to 7% by mass, and more preferably 3 to 6% by mass in 100% by mass of the polyamide resin composition. If the amount of the crosslinking agent (C) is less than the above-mentioned range, cross-linking state is insufficient and strength such as tensile strength and tensile elastic modulus, etc., are inferior. If the amount of the crosslinking agent (C) is more than the above-mentioned range, it adversely affects impact resistance such as elongation and impact strength, etc..

### <Heat-resistant agent (D)>

The polyamide resin composition comprises a heat resistant agent.

As the heat resistant agent, those that can improve heat resistance and antioxidation resistance of the molded product can be used and organic-based and inorganic-based heat resistant agents can be used depending on the purpose, and an inorganic-based heat resistant agent is preferred. These may be used one kind alone or may be used two or more kinds in combination.

### (1) Organic-based heat resistant agent

As the organic-based heat resistant agent, there may be mentioned phenol-based compounds, phosphorus-based compounds, sulfur-based compounds and nitrogen-based compounds, etc. These may be used one kind alone or may be used two or more kinds in combination.

### (Phenol-based compound)

As phenol-based compound, there may be preferably mentioned a hindered phenol-based compound. In the present specification, the hindered phenol refers to a compound having a substituent at the ortho-position (hereinafter also referred to as "o-position") of the hydroxyl group of phenol. The substituent at the o-position is not particularly limited, and there may be mentioned an alkyl group, an alkoxy group, an amino group, a halogen, etc. Among these, an alkyl group such as a methyl group, an ethyl group, an n-propyl group, an i-propyl group, an n-butyl group, a sec-butyl group, an i-butyl group and a t-butyl group, etc., is preferred, a bulky i-propyl group, sec-butyl group, i-butyl group and t-butyl group is more preferred, and a t-butyl group is most preferred. Also, regarding the o-position, it is preferred that both of the two o-positions with respect to the hydroxyl group of the phenol have a substituent.

The hindered phenol having t-butyl groups at the o-position is specifically mentioned N,N'-hexamethylenebis(3,5-di-t-butyl-4-hydroxy-hydrocinnamamide), pentaerythritol-tetrakis[3-(3,5-di-t-butyl-4-hydroxyphenyl)-propionate, ethylene bis(oxyethylene)bis[3-(5-tert-butyl-4-hydroxy-m-tolyl)propionate] and 3,9-bis[2-[3-(3-tert-butyl-4-hydroxy-5-methylphenyl)propionyloxy]-1,1-dimethylethyl]-2,4,8,10-tetraoxaspiro[5.5]undecane. These may be used one kind alone or may be used two or more kinds in combination. Commercially available products of these heat resistant agents may be mentioned "Irganox (Registered Trademark) 1010" (BASF) and "Sumilizer (Registered Trademark) GA-80" (Sumitomo Chemical Co., Ltd.). These may be used one kind alone or may be used two or more kinds in combination.

### (Phosphorus-based compound)

As the phosphorus-based compound, a phosphite compound of a hindered phenol and a hypophosphite compound of a hindered phenol are preferred, and a phosphite compound of a hindered phenol having a t-butyl group(s) at the o-position(s) and a hypophosphite compound of a hindered phenol having a t-butyl group(s) at the o-position(s) are more preferred, and a phosphite compound of a hindered phenol having a t-butyl group(s) at the o-position(s) is further preferred. The phosphite compound of a hindered phenol having a t-butyl group(s) at the o-position(s) is specifically mentioned tris(2,4-di-t-butylphenyl)phosphite and bis(2,6-di-t-butyl-4-methylphenyl)pentaerythritol diphosphite. The hypophosphite compound of a hindered phenol having a t-butyl group(s) at the o-position(s) is specifically mentioned a reaction product of biphenyl mainly containing p,p,p',p'-tetrakis(2,4-di-tert-butylphenoxy)-4,4-biphenyldiphosphine, phosphorus trichloride and 2,4-di-tert-butylphenol. Commercially available products of these heat resistant agents may be mentioned "Irgafos (Registered Trademark) 168" (BASF) and "Hostanox (Registered Trademark) P-EPQ" (Clariant Chemicals). These may be used one kind alone or may be used two or more kinds in combination.

### (Sulfur-based compound)

As the sulfur-based compound, there may be mentioned distearyl-3,3-thidipropionate, pentaerythrityl tetrakis(3-laurylthiopropionate) and didodecyl(3,3'-thiodipropionate). These may be used one kind alone or may be used two or more kinds in combination.

### (Nitrogen-based compound)

As the nitrogen-based compound, there may be mentioned melamine, melamine cyanurate, benguanamine, dimethylol urea and cyanuric acid. These may be used one kind alone or may be used two or more kinds in combination.

As the organic-based heat resistant agent, from the viewpoint of coloration of the material, a phenol-based compound and a phosphorus-based compound are preferred, and a hindered phenol-based compound is more preferred.

### (2) Inorganic-based heat resistant agent

As the kind of the inorganic-based heat resistant agents of heat resistant agents, these are copper compounds and potassium halides, and as the copper compounds, there may be mentioned cuprous iodide, cuprous bromide, cupric bromide and copper acetate, etc. From the viewpoints of heat resistance and suppression of metal corrosion. cuprous iodide is preferred. As the potassium halides, there may be mentioned potassium iodide, potassium bromide and potassium chloride, etc. From the viewpoints of heat resistance and long-term stability of the inorganic heat resistant agent, potassium iodide and/or potassium bromide is/are preferred. These may be used one kind alone or may be used two or more kinds in combination. For example, there may be preferably mentioned a combination of cuprous iodide and potassium iodide and/or potassium bromide.

Further, it is more effective to use nitrogen-containing compound such as melamine, melamine cyanurate, benguanamine, dimethylol urea or cyanuric acid, etc., in combination.

The heat-resistant agent (D) is contained in an amount of 0.1 to 1.5% by mass, more preferably 0.2 to 1.3% by mass, and further preferably 0.3 to 1.2% by mass in 100% by mass of the polyamide resin composition. If the amount of the heat resistant agents is less than the above-mentioned range, there is a fear of causing thermal deterioration of the molded product, while if it exceeds the above-mentioned range, there is a possibility of causing bleed out from the molded product.

### <Inorganic filler other than glass fiber (E) >

The polyamide resin composition preferably comprises an inorganic filler other than glass fiber as an optional component.

As the inorganic filler, for example, there may be mentioned wollastonite, potassium titanate whiskers, zinc oxide whiskers, carbon fibers, alumina fibers, silicon carbide fibers, ceramic fibers, asbestos fibers, gypsum fibers, metal fibers, etc., silicates such as sericite, kaolin, mica, clay, bentonite, asbestos, talc and alumina silicate, swelling layered silicates such as montmorillonite and synthetic mica, metal compounds such as alumina, silicon oxide, magnesium oxide, zirconium oxide, titanium oxide and iron oxide, carbonates such as calcium carbonate, magnesium carbonate and dolomite, sulfates such as calcium sulfate and barium sulfate, glass flakes, glass beads, ceramic beads, boron nitride, silicon carbide, calcium phosphate and silica, and it is preferred that it is at least one kind selected from the group consisting of silica, talc and glass milled fibers. These may be used one kind alone or may be used two or more kinds in combination.

An average particle size of talc is preferably 1 to 20 µm, and more preferably 2 to 15 µm. The average particle size of talc is an average particle size determined by a particle size distribution measurement method using a laser diffraction/scattering method. As the measurement device, there may be mentioned a laser diffraction particle size distribution measuring device SALD-7000 manufactured by Shimadzu Corporation. When a commercially available product is used as talc, the average particle size of talc adopts the catalog value of the commercially available product.

An average fiber length of the glass milled fiber is measured after pulverizing each fiber, and is preferably 10 to 200 µm, and more preferably 30 to 150 µm. The average fiber length can be obtained by, for example, a glass fiber length measurement device, and when a commercially available product is used as the glass milled fiber, the catalog value of the commercially available product is used. The fiber diameter of the glass milled fiber is preferably 2 to 30 µm, and more preferably 5 to 15 µm. The fiber diameter of the glass milled fiber can be determined by an image analyzer using, for example, optical microscope observation, etc., and when a commercially available product is used as the glass milled fiber, the catalog value of the commercially available product is used.

The inorganic filler other than glass fiber (E) is contained in an amount of 0 to 6% by mass, preferably 0.5 to 5% by mass, and more preferably 1 to 4% by mass % by mass in 100% by mass of the polyamide resin composition. When the contained ratio of the inorganic filler other than glass fiber (E) is within the above-mentioned range, mechanical characteristics of the molded product becomes good.

The polyamide resin composition may comprise optional components such as a functionality imparting agent, etc., including dyes, pigments, particulate reinforcing materials, plasticizers, antioxidants, foaming agents, weathering agents, crystal nucleating agents, crystallization accelerators, lubricants, antistatic agents, flame retardants, flame retardant auxiliaries, coloring agents, etc., depending on the purpose, etc. Among these, those that also function as inorganic fillers, they are included in the inorganic fillers in the present invention. Those that also function as heat resistant agents, they are included in the heat resistant agents.

The optional additive may be contained preferably in an amount of 0.01 to 1% by mass, and more preferably 0.05 to 0.5% by mass in 100% by mass of the polyamide resin composition.

The polyamide resin composition may comprise a thermoplastic resin other than the aliphatic polyamide resin (A). The thermoplastic resin other than the aliphatic polyamide resin (A) may be contained in an amount of preferably 2% by mass or less, more preferably less than 0.1% by mass, and further preferably not contained in 100% by mass of the polyamide resin composition, from the viewpoints of mechanical characteristics and moldability.

### <Method for producing polyamide resin composition>

The method for producing the polyamide resin composition is not particularly limited, and for example, the following method can be applied.

For mixing the aliphatic polyamide resin (A), the glass fiber (B), the crosslinking agent (C), the heat-resistant agent (D) and other optional components, generally known melt-kneading machines such as a single-screw or twin-screw extruder, a Banbury mixer, a kneader and a mixing roll, etc., are used. For example, any method may be used such as a method in which, after formulating all the raw materials using a twin-screw extruder, melt-kneading is carried out, a method in which after formulating a part of the raw materials, melt-kneading is carried out, further blending the remaining raw materials and melt-kneading is carried out, or a method in which after formulating a part of the raw materials, the remaining raw materials are mixed using a side feeder during melt-kneading, etc.

### [Molded product of polyamide resin composition and uses thereof]

The polyamide resin composition can be suitably used for production of an injection molded product by injection molding, an extrusion molded product by extrusion molding, a blow molded product by blow molding and a rotary molded product by rotary molding. The polyamide resin composition has good injection moldability, so that it can be preferably used for an injection molded product by injection molding.

A method for producing an injection molded product by injection molding from a polyamide resin composition is not particularly limited, and a known method can be used. For example, a method conforming to ISO294-1 is taken into consideration.

A method for producing an extrusion molded product by extrusion molding from a polyamide resin composition is not particularly limited, and a known method can be used.

Also, it is possible to obtain a multilayer structure by co-extrusion with polyolefins such as polyethylene or other thermoplastic resins, followed by blow molding. In such a case, it is possible to provide an adhesive layer between the polyamide resin composition layer and another thermoplastic resin layer such as polyolefin, etc. In the case of multilayer structures, the polyamide resin composition of the present invention can be used for both the outer layer and the inner layer.

A method for producing a blow molded product by blow molding from a polyamide resin composition is not particularly limited, and a known method can be used. In general, blow molding may be carried out after the parison is formed using an ordinary blow molding machine. The preferred resin temperature during parison formation is preferably in the range of 10°C to 70°C higher than the melting point of the polyamide resin composition.

A method for producing a rotary molded product by rotary molding from a polyamide resin composition is not particularly limited, and a known method can be used. For example, the method described in WO 2019/054109 is taken into consideration.

The injection molded product by injection molding, the extrusion molded product by extrusion molding, the blow molded product by blow molding and the rotary molded product by rotary molding are not particularly limited, and suitably mentioned various kinds of uses including automotive parts such as spoilers, air intake ducts, intake manifolds, resonators, fuel tanks, gas tanks, hydraulic oil tanks, fuel filler tubes, fuel delivery pipes, and various kinds of other hoses, tubes and tanks, etc., mechanical parts such as power tool housings and pipes, etc., electric and electronic parts such as tanks, tubes, horses, films, etc., household and office supplies, building material-related parts, and furniture parts, etc.

In addition, they can be suitably used for parts that are used in environments where the temperature environment fluctuates greatly, such as heat resistance, cold resistance, etc., for example, driving parts such as gears and belts in the field of vehicles such as automobiles, etc., and sliding parts such as tire sidewalls and belts, etc.

Among these, they can be suitably used for automotive parts, sliding parts or electric and electronic parts.

Also, the polyamide resin composition is excellent in gas barrier properties, so that it is suitably used for molded products that come into contact with high-pressure gas, for example, such as tanks, tubes, hoses and films, etc., that come into contact with high-pressure gas. The kind of the above-mentioned gas is not particularly limited, and may be mentioned hydrogen, nitrogen, oxygen, helium, methane, butane, propane, etc., gases with low polarity are preferred, and hydrogen, nitrogen and methane are particularly preferred.

Also, it is possible to obtain a multi-layered structure by co-extrusion with polyolefin such as polyethylene, etc., or other thermoplastic resin, followed by blow molding. In such a case, it is also possible to provide an adhesive layer between the polyamide resin composition layer and other thermoplastic resin layer(s) such as polyolefin, etc. In the case of multilayer structures, the polyamide resin composition of the present invention can be used for both outer layers and inner layers.

A density of the molded product consisting of the polyamide resin composition is preferably 1.20 to 1.28 g/ml, and more preferably 1.22 to 1.26 g/ml.

If the density is in the above-mentioned range, mechanical characteristics of the molded product are good.

### <Polyamide resin composition crosslinked material>

It is also preferable to use the polyamide resin composition as a polyamide resin composition crosslinked material by irradiating active energy rays to a molded product consisting of the polyamide resin composition.

As the active energy rays, there may be mentioned ultraviolet rays, electron beams, α rays, β rays, ion beams, particle beams, X rays, γ rays, etc., and ultraviolet rays and electron beams are preferred.

As the ultraviolet light source, a xenon lamp, a low-pressure mercury lamp, a high-pressure mercury lamp, an ultra-high-pressure mercury lamp, a metal halide lamp, a carbon arc lamp, a tungsten lamp, etc., can be used. The irradiation time can be appropriately changed depending on conditions such as the kind of a compound having a polymerizable unsaturated bond, the kind of a photopolymerization initiator, the coating thickness, the ultraviolet source, etc. From the viewpoint of workability, it is preferred to irradiate for 1 to 60 seconds. Further, for the purpose of completing the curing reaction, heat treatment may be carried out after irradiation with ultraviolet rays. The dose of ultraviolet rays used for curing the composition of the present invention is preferably 300 to 3,000 mJ/cm² from the viewpoints of rapid curing and workability.

An electron beam, etc., can also be used as an active energy rays. When curing with an electron beam, a photopolymerization initiator may not be added, and an electron beam accelerator having an energy of 100 to 500 eV is preferably used.

A density of the polyamide resin composition crosslinked material after irradiating electron beam to the molded product consisting of the polyamide resin composition is preferably 1.20 to 1.28 g/ml, and more preferably 1.22 to 1.26 g/ml.

If the density is in the above-mentioned range, mechanical characteristics of the crosslinked material are good.

Uses of the polyamide resin composition crosslinked material may be mentioned the same uses as the uses of the molded product of the polyamide resin composition mentioned above.

### EXAMPLES

Hereinafter, the present invention will be explained in more detail by Examples and Comparative examples, but the present invention is not limited to these Examples.

The numerical values of Examples, Comparative examples and raw materials were measured by the following methods.

### <Relative viscosity>

In accordance with JIS K6920-2, it is a value of dissolving 1 g of polyamide resin in 100 ml of 96% concentrated sulfuric acid and measured at 25°C.

### <Terminal amino group concentration>

Polyamide resin was dissolved in a mixed solvent of phenol and methanol and it was obtained by neutralization titration.

### <Melting point>

In accordance with ISO 11357-3, using a differential scanning calorimeter, a sample was heated to a temperature the expected melting point or higher, and then the sample was cooled at a rate of 10°C per minute, cooled to 30°C, allowed to stand as such for about 1 minute and heated at a rate of 20°C per minute, and the measured temperature at the peak value of the melting curve was made the melting point. The value before electron beam irradiation of lower than 200°C was made pass, and the value after electron beam irradiation of lower than 200°C was made pass.

### <Density>

In accordance with ISO1183-3 (gas pycnometer method), it was measured using an ISO TYPE-B type test piece obtained by injection molding a polyamide resin composition, and a value before electron beam irradiation of lower than 1.28 g/cm³ was made pass, and a value after electron beam irradiation of lower than 1.28 g/cm³ was made pass.

### <Water absorption>

An ISO TYPE-A test piece obtained by injection molding a polyamide resin composition was immersed in water at 80°C for 24 hours, and the water absorption was calculated from the difference in mass of the test piece before and after immersion. The value before electron beam irradiation of lower than 1.0% was made pass, and the value after electron beam irradiation of lower than 1.0% was made pass.

### <Mechanical characteristics>

Using ISO TYPE-A type test piece and ISO TYPE-B type test piece obtained by injection molding a polyamide resin composition and a polyamide resin composition obtained by irradiating an electron beam, respectively, the following mechanical characteristics were measured.

### (1) Tensile strength and tensile breaking strain

These were measured in accordance with ISO527 using a tensile tester model 5567 manufactured by Instron at 23°C.

Regarding the tensile strength, the value before electron beam irradiation of exceeding 120 MPa was made pass, and the value after electron beam irradiation of 125 MPa or more was made pass.

Regarding the tensile breaking strain, the value before electron beam irradiation of 8% or less was made pass, and the value after electron beam irradiation of 6% or less was made pass.

### (2) Bending strength and bending elastic modulus

These were measured by the method in accordance with ISO178 using a tensile tester model 5567 manufactured by Instron at 23°C.

Regarding the bending strength, the value before electron beam irradiation of exceeding 180 MPa was made pass, and the value after electron beam irradiation of exceeding 185 MPa was made pass.

Regarding the bending elastic modulus, the value before electron beam irradiation of exceeding 6,300 MPa was made pass, and the value after electron beam irradiation of exceeding 6,500 MPa was made pass.

### (3) Charpy impact strength

It was measured in accordance with ISO527-2/1A/50 using a tensile tester model 5567 manufactured by Instron at 23°C.

The value before electron beam irradiation of 18 kJ/m² or more was made pass, and the value after electron beam irradiation of 17 kJ/m² or more was made pass.

### (4) Rockwell hardness (M scale)

It was measured in accordance with ISO 6508-1 using an electric digital Rockwell hardness tester model ARD-P manufactured by Akashi Seisakusho, Ltd., at 23°C.

The value before electron beam irradiation of 55 or more was made pass, and the value after electron beam irradiation of 63 or more was made pass.

From the above measured values, comprehensive evaluation was carried out according to the following criteria.
○: Satisfies all pass criteria for each of the above-mentioned measured values
×: Does not meet one or more of the above-mentioned pass criteria for each measured value.

### [Examples 1 to 4 and Comparative examples 1 to 5]

Each component described in Table 1 was subjected to melt-kneading with a twin-screw kneader ZSK32-Mc, a cylinder diameter of 32 mm L/D47, a cylinder temperature of 220°C, a screw rotation of 220 rpm and a discharge amount of 40 kg/hrs to prepare an objective polyamide resin composition pellets. A test piece was prepared from the obtained polyamide resin composition pellets by the above-mentioned method and used for evaluation before electron beam irradiation.

The test piece used for evaluation before electron beam irradiation was irradiated with an electron beam of 100 kGy and an electron beam energy of 4.8 MeV, and used for evaluation after electron beam irradiation.

The results are shown in Table 1.

Incidentally, the unit of composition in the Table is % by mass, and the total resin composition is made 100% by mass.

The components described in Table 1 were used the following.
PA12 (1): polyamide 12, relative viscosity of 2.2, melting point of 179°C, terminal amino group concentration of 33 µmol/g, available from Ube Industries, Ltd.
PA12 (2): polyamide 12, relative viscosity of 2.2, melting point of 179°C, terminal amino group concentration of 22 µmol/g, available from Ube Industries, Ltd.
PA12 (3): polyamide 12, relative viscosity of 2.5, melting point of 178°C, terminal amino group concentration of 23 µmol/g, available from Ube Industries, Ltd.
PA12 (4): polyamide 12, relative viscosity of 1.9, melting point of 179°C, terminal amino group concentration of 27 µmol/g, available from Ube Industries, Ltd.
PA6: polyamide 6, relative viscosity of 2.6, melting point of 220°C, terminal amino group concentration of 36 µmol/g, available from Ube Industries, Ltd.
Glass fiber (1): CSG 3J-820, E-glass, cut length of 3 mm, cross-sectional shape: flat shape, short diameter of 5 µm × long diameter of 20 µm (catalog value), binder component: urethane (manufactured by Nitto Boseki Co., Ltd.)
Glass fiber (2): ECS 03T-920EW, E-glass, cut length of 3 mm, cross-sectional shape: flat shape, short diameter of 7 µm × long diameter of 28 µm (catalog value), binder component: urethane + acid copolymer (manufactured by Nippon Electric Glass Co., Ltd.)
Glass fiber (3): HP3610XM, R-glass, cut length of 3 mm, cross-sectional shape: circular average fiber diameter of 10 µm (catalog value), binder component: urethane and acid copolymer (manufactured by Nippon Electric Glass Co., Ltd.)
Crosslinking agent and inorganic filler: WH-60 (Registered Trademark) (manufactured by Mitsubishi Chemical Corporation) In this product, triallyl isocyanurate that is a crosslinking agent is contained 60% in a weight ratio and the remaining weight ratio of 40% is an inorganic filler.

Heat resistant agent: a mixture of cuprous iodide and potassium iodide with 1 : 6 Crystallization accelerator (inorganic filler): MICRO ACE (Registered Trademark) L-1, average particle diameter D50: 5 µm (manufactured by Nippon Talc Co., Ltd.)

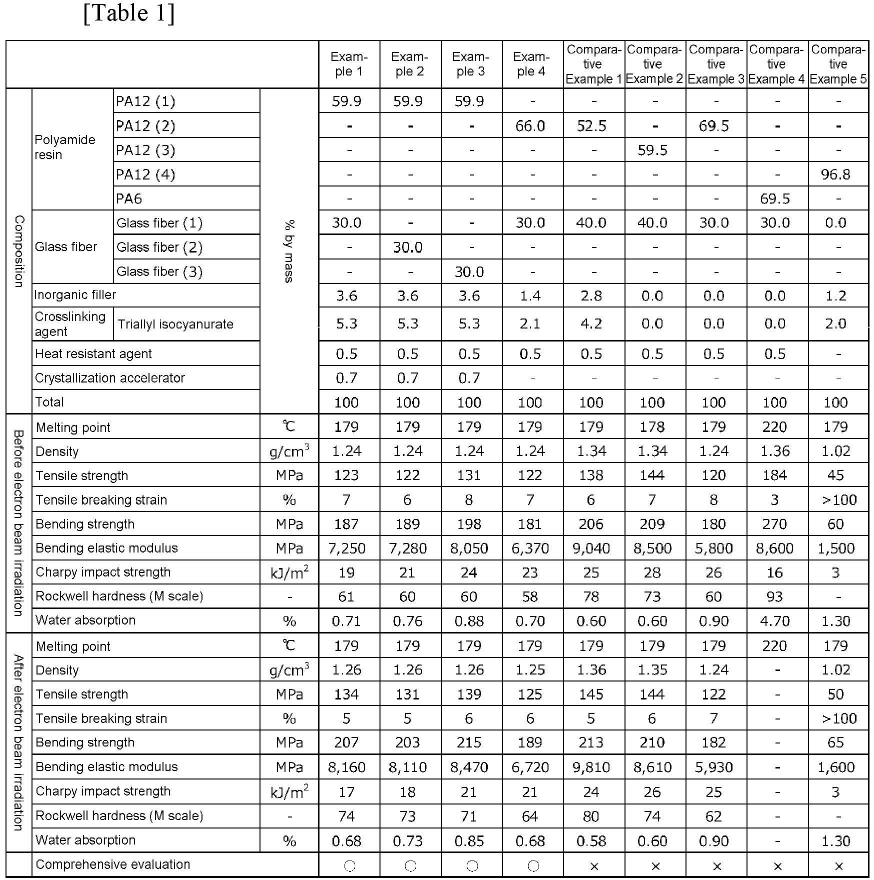

When Examples 1 to 5 and Comparative example 1 are compared, it can be understood that when the amount of the polyamide resin is less than the range of the present invention and the amount of the glass fiber is larger, the density becomes high both before and after electron beam irradiation.

When Examples 1 to 5 and Comparative example 2 are compared, it can be understood that when the crosslinking agent is not contained and the amount of the glass fiber is larger than the range of the present invention, the density becomes high both before and after electron beam irradiation.

When Examples 1 to 5 and Comparative example 3 are compared, it can be understood that when the crosslinking agent is not contained, the values of the bending strength and bend elastic constant becomes low both before and after electron beam irradiation. When Examples 1 to 5 and Comparative example 4 are compared, it can be understood that when polyamide 6 is used as the polyamide resin, the density before electron beam irradiation is high and water absorption becomes high.

When Examples 1 to 5 and Comparative example 5 are compared, it can be understood that when the glass fiber is not contained, the values of the bending strength and bend elastic constant become low and the water absorption becomes high both before and after electron beam irradiation.

### UTILIZABILITY IN INDUSTRY

The polyamide resin composition can be used as the injection molded product by injection molding, the extrusion molded product by extrusion molding, the blow molded product by blow molding and the rotary molded product by rotary molding. These molded products and their crosslinked materials are suitably used for, in particular, automotive parts, sliding parts or electric and electronic parts.

## Claims

1. A polyamide resin composition which comprises 55 to 78% by mass of an aliphatic polyamide resin (A), 20 to 35% by mass of glass fiber (B), 1 to 9% by mass of a crosslinking agent (C), 0.1 to 1.5% by mass of a heat-resistant agent (D) and 0 to 6% by mass of an inorganic filler other than glass fiber (E) in 100% by mass of the polyamide resin composition, and
the aliphatic polyamide resin (A) has an average number of carbon atoms per one amide group of exceeding 6.

2. The polyamide resin composition according to Claim 1, wherein the aliphatic polyamide resin (A) has a melting point measured in accordance with ISO 11357-3 of 170 to 210°C.

3. The polyamide resin composition according to Claim 1, wherein the aliphatic polyamide resin (A) is at least one kind selected from the group consisting of at least one kind of a homopolymer selected from the group consisting of polynonamethylene dodecamide (polyamide 912), polydecamethylene sebacamide (polyamide 1010), polydecamethylene dodecamide (polyamide 1012), polydodecamethylene dodecamide (polyamide 1212), polyundecaneamide (polyamide 11) and polydodecaneamide (polyamide 12), and at least one kind of a copolymer selected from the group consisting of polyamide 6/12 copolymer and polyamide 6/66/12 copolymer.

4. The polyamide resin composition according to Claim 1, wherein the crosslinking agent (C) is at least one kind selected from the group consisting of triallyl cyanurate, triallyl isocyanurate, trimethallyl isocyanurate, diallyl phthalate and diallylbenzene phosphonate.

5. The polyamide resin composition according to Claim 1, wherein the heat-resistant agent (D) is an inorganic-based heat resistant agent.

6. The polyamide resin composition according to Claim 1, wherein the glass fiber (B) is surface treated by a surface treatment agent and/or a binder.

7. A molded product of the polyamide resin composition according to any one of Claims 1 to 6.

8. A polyamide resin composition crosslinked material obtainable by irradiating active energy rays to a molded product of the polyamide resin composition according to Claim 7.

9. The polyamide resin composition crosslinked material according to Claim 8, wherein a density thereof is 1.20 to 1.28 g/ml.
